# EUROPEAN PATENT SPECIFICATION

(11) **EP 4 362 718 B1**
(45) Date of publication and mention of the grant of the patent: **05.03.2025**
(21) Application number: 22823534.7
(22) Date of filing: 01.12.2022
(51) Int. Cl.: A24D 3/02, A24C 5/35, A24C 5/32, A24C 1/38, A24C 5/345, B65G 47/08, B65G 47/18, B65G 47/256

(54) **HOPPER FOR ROD-SHAPED ARTICLES AND METHOD FOR REMOVING ROD-SHAPED ARTICLES FROM A HOPPER**
MAGAZIN FÜR STABFÖRMIGE ARTIKEL UND VERFAHREN ZUM ENTNEHMEN VON STABFÖRMIGEN ARTIKELN AUS EINEM MAGAZIN
TRÉMIE POUR ARTICLES EN FORME DE TIGE ET PROCÉDÉ DE RETRAIT D'ARTICLES EN FORME DE TIGE À PARTIR D'UNE TRÉMIE

(30) Priority: 02.12.2021 EP 21212035
(43) Date of publication of application: 08.05.2024
(73) Proprietor: Philip Morris Products S.A., 2000 Neuchâtel (CH)
(72) Inventor: LOBIKOV, Dmitry Alekseevich, Leningrad, 198323 (RU)
(74) Representative: HGF
(86) International application number: PCT/EP2022/083996
(87) International publication number: WO 2023/099643

(56) References cited:
- EP-A1- 0 545 724
- EP-A1- 1 160 165
- WO-A1-2018/122326

## Description

The present disclosure relates to a hopper for rod-shaped articles, in particular the present invention relates to a hopper to remove rod-shaped articles from the hopper.

In the manufacturing of rod-shaped articles, for example of rod-shaped consumables, articles may be transported using hoppers. Hoppers are typically configured to process articles having essentially identical geometry. Any deviation in the shape of the article, for example deformed or broken articles, may negatively influence the performance of a hopper to the extent that the hopper needs to be temporarily taken out of operation. This particularly applies in hoppers where articles are transported in substantially vertical columns. Solutions to remove defective articles from hoppers generally comprise detection means to identify the defective articles and active pushing means to push the defective articles out of the hopper.

EP1160165 A1 discloses a device comprising a hopper through which to direct a flow of cigarettes, a conveyor with pockets moving intermittently past a discharge outlet of the hopper, and a reciprocating pusher located on the side of the hopper opposite from the conveyor by which a portion of the flow corresponding to one group of cigarettes is directed with each forward stroke into a relative pocket. To avoid damage of the kind often associated with sliding contact and axial compression, the cigarettes adjacent to those ejected by the pusher are restrained when their cylindrical surfaces are attracted by suction generated through ports located inside the hopper.

EP0545724 A1 discloses apparatus for preventing vane jams in cigarette hoppers comprising a plurality of curved guides extending from the back to the front of the hopper. The guides help straighten cigarettes that have become slightly skewed in relation to cigarettes that are correctly positioned in the hopper. The guides also prevent cigarettes that have become skewed to a greater extent or turned perpendicular to correctly positioned cigarettes in a hopper from reaching the vanes of the hopper and causing jam or blockages of the vanes. The guides stop the descent through the hopper of mispositioned cigarettes and cause such cigarettes to slide toward either the front or back wall of the hopper for removal.

WO2018/122326 A1 discloses a hopper for rod shaped articles having a longitudinal axis, the hopper including: a chamber to hold the rod shaped articles; a distributor device adapted to distribute the rod shaped articles with substantially parallel axes, the distributor device including a plurality of walls defining adjacent channels distributing the rod shaped articles with their longitudinal axes aligned along a first direction of alignment, at least one of the walls of the plurality having a free end defining a first and a second opposite surfaces, at least one of which facing toward a channel, and a connecting border surface, connecting the first and the second surface, the connecting border surface facing said chamber and including an inclined portion forming a slope with respect to the first direction of alignment leading away from said chamber so as to form an auxiliary channel to channel misplaced rod shaped articles with their longitudinal axes aligned along a second direction of alignment not parallel to the first direction of alignment.

There is need for a hopper for rod-shaped articles with simple design and cost-efficient means for the removal of defective articles.

The invention relates to a hopper for rod-shaped articles having a longitudinal axis, the hopper comprising a plurality of guiding vanes defining adjacent guiding channels in between the guiding vanes, the guiding channels provided for guiding rod-shaped articles through the hopper in a transport direction transverse to the longitudinal axis of the articles. The guiding channels comprise substantially vertical side walls formed by the guiding vanes and are open along at least a front side such that articles may extend out of the guiding channels and beyond guiding vane front surfaces. The hopper further comprises a deflector arranged at a front surface of at least one guiding vane. The deflector is for removing a rod-shaped article from the hopper, wherein the article extends across the front surface of the at least one guiding vane. For example, the article extends towards or even into an adjacent guiding channel.

By the provision of a deflector, defective or broken articles may be removed from the guiding channels and from the hopper by very simple and cost-efficient mechanical means. The deflector is arranged in a region where only defective articles are present, and where these elements may disturb regular processing of the articles in the hopper.

The hopper according to the invention has the advantage that disturbance in a downwards flow of articles in the hopper may be eliminated or at least be reduced. An improved rate of production may be achieved and economy of manufacture may be improved. Due to a simple construction of the deflector, implementation is facilitated, including implementation in already existing devices. The present invention provides a cost-efficient and robust means of addressing some challenges faced by hoppers.

The guiding channels each have a guiding channel length or guiding channel longitudinal extension in the transport direction of the articles to be transported. The guiding channels also have a guiding channel depth extending in the direction of the longitudinal axis of the articles when the articles are arranged in the guiding channels. A guiding channel width accordingly extends transversely to the length and depth and is adapted to an article diameter of an article to be transported in the channel. For example, the guiding channel width is preferably marginally greater than an article diameter. The guiding channel width may be in the range of 1 percent to 20 percent greater than the article diameter, preferably 10 percent greater, more preferably at least 5 percent greater than the article diameter.

Alternatively, a guiding channel width may be marginally greater than a multiple of an article diameter. That is, in some embodiments more than one article, for example two or three articles, may be arranged and transported side by side along the width of a guiding channel.

The term 'substantially vertical' referring to the inner walls of the guiding vanes forming the guiding channel or referring to the guiding channel includes an exact vertical arrangement as well as deviations from the exact vertical arrangement by up to about 45 degrees. A 'substantially vertical' arrangement preferably includes deviations from the exact vertical between 0 degree and 30 degrees, more preferably between 0 degree and 15 degrees. Therein, 0 degree refers to the exact vertical and 90 degrees refers to the horizontal. Preferably, the guiding channels are arranged in a non-exact vertical arrangement and include an angle of about 10 degrees to 20 degrees with the exact vertical arrangement.

Opposite a guiding vane front surface, a guiding vane rear surface is provided. The guiding vane front surface extends between two adjacent opposite guiding vane sides. The guiding vane sides may form inner walls of at least a part of adjacent guiding channels. The guiding vane front surface extends in the transport direction. Thus, the guiding vane front surface may extend in a vertical direction or in a direction having a substantial vertical component. The guiding vane front surface may be planar or comprise a planar portion. The guiding vane rear surface may be planar or comprise a planar portion. The deflector may be provided on a guiding vane front surface portion of the front surface.

A deflector or deflectors arranged at a front of the hopper allows to remove articles via the front of the hopper. Accordingly, a deflector or deflectors arranged at a back of the hopper allows to remove articles via the back side of the hopper.

Any aspect of the deflector disclosed herein with reference to a guiding vane front surface may accordingly also be applied to a guiding vane rear surface.

Preferably, the deflector projects from the guiding vane front surface of the at least one guiding vane. The deflector may project in a direction normal to a guiding vane front surface. By means of the deflector projecting from the guiding vane front surface, the arranging of the deflector parallel to the guiding channels is enabled or facilitated. The deflector may thus deflect articles that extend out of a guiding channel and in particular in a transverse direction, for example at least partially across the guiding vane front surface. In a non-limiting example, the article may comprise a curved longitudinal axis such that the article reaches across the guiding vane front surface. When the article reaches the position of the deflector, the deflector may as a consequence deflect the article, since the deflector is engaging with the portion of the article extending across the guiding vane front surface. In a further non-limiting example, the article may be at least partially broken to the extent that a fragment of the article is arranged pivoted or folded about a portion of the article that is arranged in the guiding channel. The article, which may in this particular case be an article fragment, reaches across the guiding vane front surface. When the article reaches the position of the deflector, the deflector may as a consequence deflect the article while the deflector engages with the fragment of the article extending across the guiding vane front surface.

The deflector may be attached to the front surface of the at least one guiding vane, for example by means of adhesive, welding or brazing. A deflector being attached to the guiding vane front surface, may, for example, mechanically transfer an oscillating movement of the guiding vane to the deflector, causing the deflector to oscillate as well.

The deflector may be integrally formed with the guiding vane. The deflector being integrally formed with the guiding vane may be beneficial for robustness. In addition, an integral forming of deflector and guiding vane may simplify a manufacturing process.

Preferably, the sides of the deflector are arranged flush with respective sides of the at least one guiding vane. Such a flush arrangement may support a smooth transfer of articles in a guiding channel without undesired interaction with mechanical steps in between a side of the guiding vane and the side of the deflector. A deflector width, that is, a distance between deflector sides, may be smaller than a guiding vane width at the position of the deflector, that is, smaller than a distance between the guiding vane sides. A deflector width is, for example, at least 50 percent of a guiding vane width, preferably at last 70 percent, most preferred 100 percent of a guiding vane width. These relative sizes also apply when a guiding vane width changes. For example, in a more downstream portion of the guiding channels, guiding vanes may taper versus a bottom of a guiding channel. As such, the relative sizes refer to the local position of the deflector at the guiding vane.

The deflector may comprise a deflecting surface. By the deflecting surface, articles are mechanically deflected by the deflecting surface simply in response to a movement of the article along the guiding channel, for example under the influence of gravity. Additionally, by the deflecting surface a movement of the article into a predetermined direction may be defined and supported, for example, a movement radially away from the guiding vane front surface, preferably superposed with a movement further in the transport direction.

Preferably, the deflecting surface comprises a planar portion or a curved portion or comprises a planar portion and a curved portion. A planar portion may minimize frictional effects between article and deflecting surface, while the article slides or rolls along the deflecting surface. A curved portion may give the article to be deflected a specific deflecting trajectory.

The deflecting surface may have a deflecting surface depth, that is, an extension along a guiding channel depth direction, in a range of 5 millimeters to 40 millimeters, preferably 10 millimeters to 30 millimeters, more preferably in a range of 15 millimeters to 25 millimeters, for example of about 21 millimeters.

The deflecting surface may have a deflecting surface height, that is, an extension along a guiding channel length direction, in a range of 10 millimeters to 25 millimeters, preferably 12 millimeters to 20 millimeters, for example of about 15 millimeters.

The deflecting surface may have an extension in a length direction of a rod-shaped article corresponding to between 5 percent and 90 percent of a length a rod-shaped article, preferably between 20 percent and 70 percent, for example about 50 percent of a length a rod-shaped article.

The deflecting surface may have a height corresponding to between 100 percent and 400 percent of a diameter of a rod-shaped article, preferably to between 180 percent and 300 percent, for example to about 200 percent of a diameter of a rod-shaped article.

A deflecting surface length extending along the deflecting surface may be in a range of 5 millimeters to 50 millimeters, preferably 10 millimeters to 40 millimeters, more preferably 20 millimeters to 30 millimeters, for example about 26 millimeters.

Sizes of deflecting surfaces in the above given ranges arranged at the guiding vane front surface have been found beneficial for efficient article deflection, in particular for rod shaped articles with the dimensions below.

A rod-shaped article may have a diameter of between 5 millimeters and 10 millimeters, for example 7 millimeters.

A rod-shaped article may have a length between 5 millimeters and 150 millimeters, more preferably, between about 30 millimeters and 150 millimeters or between 25 millimeters and 50 millimeters, for example 90 millimeters or 45 millimeters.

Preferably, the deflecting surface comprises a slope in the transport direction of the rod-shaped article in the guiding channels. Preferably, the deflecting surface comprises a planar portion which slopes in the transport direction. By a slope in the transport direction, deflection of the article may be facilitated as deflection is assisted by gravitational force.

A slope of a deflecting surface may include a slope angle in a range of 10 degrees to 50 degrees, preferably 20 degrees to 40 degrees, more preferably 30 degrees to 40 degrees, for example 35 degrees with respect to a plane perpendicular to the transport direction. Slope angles of a deflecting surface in these ranges have been found beneficial for effective deflection of an article or a fragment of an article.

A shape of a deflector may basically be freely chosen in order to achieve a desired deflection result for an article or a fragment of an article away from the front side of the hopper. Preferably, a shape of a deflector is chosen as simple as possible.

Preferably, the deflector has a triangular cross-section or comprises a body having a triangular cross-section, for example in the form of a right-triangle or equilateral triangle. A deflector being a right-triangle or having a body in the form of a right-triangle may facilitate attachment to a preferably planar front surface of a guiding vane. In addition, a right-triangle has a slope in a transport direction, deflects the article away from the guiding vane front surface, thus away from a front side of the hopper, and forms a planar deflecting surface for the article to be deflected. A triangular form is particularly easy to manufacture.

A deflector may be made of any suitable material. A deflector may, for example, be made of plastics, such as for example Plexiglas, or metal, such as for example steel or aluminium. Preferably, a deflector is made of a same material as a guiding vane or as a front cover as described further below.

The deflector may be arranged at a guiding vane front surface of the at least one guiding vane and at a position between a guiding channel inlet and a guiding channel outlet of the guiding channel partially formed by the at least one guiding vane. A deflector arranged in between a guiding channel inlet and a guiding channel outlet may deflect articles which have entered the guiding channel via the guiding channel inlet either in a defective state or which have been deformed or damaged while being transported in the guiding channel.

Preferably, the deflector is arranged at an upstream portion of the guiding vane front surface, for example proximal a guiding channel inlet. By the deflector being provided at an upstream portion, a defective article may be deflected at an early stage and thus removed from the hopper before blocking or disturbing a series of articles arranged in the guiding channel.

Alternatively, or in addition, the deflector is arranged at a downstream portion of a guiding vane front surface of the at least one guiding vane, for example proximal a guiding channel outlet. By the deflector being provided at a downstream portion, a defective article which has not yet been deflected, for example by a deflector provided at an upstream portion, may be deflected before being further transported together with correctly aligned articles, for example to a further manufacturing device.

More than one deflector may be arranged at a guiding vane front surface of the at least one guiding vane. The provision of several deflectors on a same guiding vane may improve an overall result in removing defective articles.

Preferably, a deflector is arranged at several or all guiding vane front surfaces. Therein, a position of the deflector at the guiding vane front surface may be the same as a position of the deflector at a neighbouring guiding vane front surface. Alternatively, the position of the deflector at the guiding vane front surface may be different to a position of the deflector at a neighbouring guiding vane front surface. The relative positions of deflectors on neighbouring guiding vanes may influence the interaction of deflection of articles in neighbouring guiding channels, preferably reduce a blocking action of articles possibly to be removed by a same deflector.

It has been shown that by simple mechanical means in the form of a deflector for deflecting an article or a fragment of an article operation of a hopper may be improved. The function of the deflector is independent of any electromechanical actuators, pneumatic actuators or hydraulic actuators. Such known system may be omitted in the hopper of the present invention. In addition, known systems for sensing articles, such as optical sensor or electrically powered sensing means may completely be eliminated.

The hopper may further comprise a vibrating device adapted to oscillate the guiding vanes. By the guiding vanes being oscillated, transport of the articles in the guiding channels is facilitated.

A guiding channel frontal boundary in the depth direction may be provided in the form of a front cover. The term "front" refers to the front of the hopper, which is typically proximal an operator. Correspondingly, a guiding channel rear boundary in the depth direction may be provided in the form of a rear cover. Moreover, the guiding channel longitudinal extension may be limited by a bottom wall. The articles may thus displace in the guiding channels in the transport direction towards the bottom wall.

Preferably, a front gap is provided between a front end of an article transported in the guiding channel and a front cover or an inner side of the front cover, respectively. Likewise, a rear gap may be provided between a rear end of the article and a rear cover.

Front gaps and rear gaps may prevent friction between the ends of articles transported in the guiding channels and an inner side of a front or rear cover. Such friction might otherwise skew and turn the articles in the guiding channels, thus possibly leading to blockage in a guiding channel.

A front gap or a rear gap may be in a range of a few millimeters. Preferably, a front gap or a rear gap when referring to the distance of front cover and front end of article, is smaller than the diameter of an article, Thus, such a front gap or rear gap may have a size in a range between 2 millimeters and 10 milllimeters, preferably, between 2 millimeters and 6 millimeters,

A front gap may also be referred to with respect to the distance between a guiding vane front surface and an inner side of the front cover. Or likewise, a rear gap provided between a guiding vane rear surface and a rear cover. In these examples, a front gap or a rear gap may also be in a range of a few millimeters. However, a front gap or a rear gap may then preferably have a size in a range between 2 millimeters and 30 millimeters, preferably in a range between 5 millimeters and 25 millimeters.

A front gap and a rear gap may have a same size or may have a different size.

A guiding channel depth may be adapted to be smaller than a length of an article. The guiding channel depth may, for example, be 5 percent to 40 percent smaller than the length of an article. Thereby, blockage of a guiding channel by a defective article may be minimized as only a portion of the article is arranged in the guiding channel.

The hopper may comprise a front cover covering the front side of the guiding channels. The front cover may restrict article movement in the guiding channels in a direction of the article longitudinal axis, and may thus prevent that the articles fall out of the guiding channels. Preferably, the front cover is arranged such that articles in the guiding channels may to some extent move along their longitudinal axis in the guiding channels. Regular transport of the articles in the guiding channels is thereby not disturbed by the presence of the front cover.

The front cover may preferably be transparent in order to enable visual inspection of the processing of articles in the guiding channels. As an example, the front cover may be made of Plexiglas or like materials.

The front cover comprises at least one opening. The opening is arranged juxtaposed the guiding vane front surface of the at least one guiding vane provided with the deflector and is arranged at the position of the deflector.

In particular, the front cover comprises at least a same number of openings as there are deflectors, wherein at least one opening is associated with each deflector.

The deflector may project from the guiding vane front surface of the at least one guiding vane and may extend at least partially through the at least one opening. Preferably, the deflector projects from the guiding vane front surface of the at least one guiding vane and extends through the at least one opening. By the deflector extending through the opening, the deflector is thus capable of deflecting the article safely to and through the opening in the front cover and away from the hopper. Thus, there is provided an opening through which an article may exit the hopper preventing that the article can cause a jam in the hopper.

Preferably, the at least one opening has an elongate shape, preferably an obround shape. Such shapes may easily be manufactured in a front cover, for example by milling.

Preferably, an extension of the at least one opening is at least as large as an extension of the deflector.

Preferably, an opening length of the at least one opening in the transport direction corresponds to at least three times to the extension of the deflector in the transport direction, preferably to at least two times to the extension of the deflector, more preferably to at least one and a half times the extension of the deflector.

Preferably, an opening width of the at least one opening corresponds to at least a width of the deflector, preferably an opening width of the at least one opening is about 10 percent greater than the width of the deflector, more preferably about 5 percent greater.

Preferably, an opening width of the at least one opening corresponds to a guiding channel width. Thus, an opening width of the at least one opening may correspond to an article diameter of the articles transported in the hopper plus 10 percent of the article diameter, preferably plus 5 percent of the article diameter.

The extensions of individual openings may the same or may be different for two or more openings.

The provision of a deflector in combination with an opening advantageously enables the hopper to support and guide a deflected article also after the article has been deflected out of the guiding channel to a position where the article is arranged at least partially in the opening. The deflector then supports the article from underneath while the inner edges of the opening may position the article laterally and in a favourable position to be passed through the opening. The article may then slide down the sloping portion of the deflector and out of the hopper.

In some embodiments, the front cover may comprise the deflector. For example, the deflector may be attached to the front cover, that is, to an inner surface of a front cover, for example by means of adhesive, welding or brazing. Alternatively, the deflector may be integrally formed with the front cover. By this, a deflector is stationary relative to guiding vanes during operation of the hopper.

The deflector may protrude from an inner surface of the front cover which faces the guiding vanes. The deflector may be provided by the front cover juxtaposed the guiding vane front surface. Preferably, the deflector sides are arranged flush with the guiding vane sides. The deflector may extend into a front gap

Alternatively, or in addition, a deflector may be provided mutatis mutandis as set forth above, however, at a rear cover.

The guiding vanes may taper along the transport direction such that the guiding channels are converging in the transport direction. That is, a guiding vane width may decrease along the transport direction. The guiding vane width corresponds to the thickness of the guiding vane. Thereby, articles in the respective guiding channels are brought into closer proximity of each other, which may facilitate a further processing of the article, after the articles have left the hopper, for example for a packaging of the articles.

Preferably, a bottom of the guiding channels is closed. In such embodiments, the articles are preferably deflected out of the front of a hopper or out of the rear of the hopper.

According to a further aspect, the invention relates to a manufacturing line of rod-shaped articles comprising a hopper as described in this application.

According to yet a further aspect, the invention relates to a method for removing a rod-shaped article from a hopper as described in this application. The method comprises receiving articles in adjacent guiding channels formed by a plurality of substantially vertically arranged guiding vanes; oscillating the guiding vanes, thereby oscillating the articles downwards through the guiding channels; and removing a rod-shaped article that extends over a guiding vane front surface, by deflecting the article in a direction radially away from the guiding vane front surface by means of a deflector arranged at the guiding vane front surface.

The method may further comprise covering a front side of the hopper with a front cover, wherein the front cover covers a front side of the guiding channels. The method may further comprise providing at least one opening in the front cover; and removing the rod-shaped article from the hopper by deflecting the rod-shaped article through the at least one opening by the deflector.

The front cover may comprise several front cover sections. Each front cover section of the several front cover sections then covers the front of several guiding channels. Preferably, at least one of the several front cover sections is individually removable from the hopper. More preferably, each of the several front cover sections is individually removable from the hopper.

In the method, the rod-shaped article may be a complete article, a semi-finished article, a fragment of an article, or a fragment of a semi-finished article.

Preferably, in the method, a guiding channels width is marginally greater than a multiple of an article diameter. More preferably, a guiding channel width is marginally greater than an article diameter.

Advantages and features of the invention described with respect to the hopper are applicable to the manufacturing line and the method accordingly.

By expressions like "along the extension", as used herein with reference to an extension, such as "along the width extension" is generally meant a direction parallel to the relevant extension of the guiding channel.

As used in this context, the term "rod-shaped article" refers to a complete article, a semi-finished article, a fragment of a complete article or a fragment of a semi-finished article. A complete article may comprise a plurality of rod-shaped elements in an end-to-end arrangement, which elements are wrapped, for example in a wrapping paper.

Accordingly, and as used herein, the term "defective article" refers to an article, which has been jammed, skewed, broken, bent or otherwise deformed, 'Defective article' also refers to separate article portions, for example an article fragment. As an example, an article fragment may be an element of an article at least partially broken off from an article. An article fragment may also be an article portion which longitudinal axis curves or bends. In the latter examples, the article fragment may curve, pivot or be folded out of a guiding channel at the open front side of the guiding channel.

The term "deflect" may in this context include one or more of passively influencing an article displacement direction in response to physical contact with the article or passively manipulating a shape of an article in response to physical contact with the article, such as pivoting or folding an article fragment, or passively altering an orientation of an article in response to physical contact with the article, wherein "physical contact" may refer to physical abutting or physical engagement.

Examples will now be further described with reference to the figures in which:
Fig. 1 shows details of rod-shaped articles in a hopper;
Fig. 2 shows details of a hopper according to the invention;
Fig. 3 shows details of a hopper according to the invention;
Fig. 4 shows details of a hopper comprising a cover plate;
Fig. 5 is an illustration of a front view of an opening in a cover plate and a deflector at a guiding vane front surface;
Fig. 6 shows a side view of a deflector;
Fig. 7 is a schematic illustration of a front view of a hopper;
Fig. 8 is a diagrammatic view of a method according to the invention;
Fig. 9 schematically illustrates a manufacturing line.

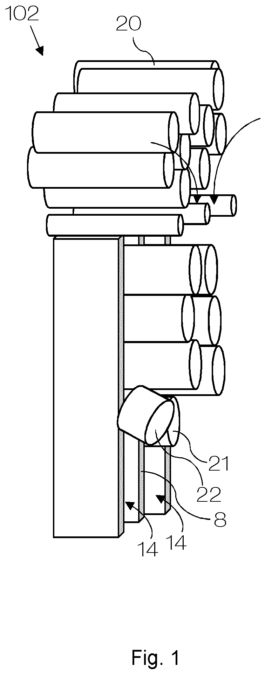

**Fig. 1** shows details of a hopper 102, wherein rod-shaped articles 20 are arranged in the hopper 102. The rod-shaped articles 20 displace vertically downwards in the guiding channels 14 along the guiding channel length 5 in the transport direction of the articles and perpendicular to the longitudinal axis of the articles 20.

The articles 20 are arranged at least partially in the guiding channels 14 and protrude, in this example, from a front of the guiding channels. In particular, the articles 20 extend over guiding vane front surfaces 8.

As may be seen in Fig. 1, in a lower guiding channel position, a second article portion 22 is displaced, for example pivoted, relative to a first article portion 21. For example, the second portion 22 has been broken or partially been broken from the first portion 21.

The first article portion 21 is still arranged in the guiding channel 14. The second article portion 22 extends out of the guiding channel 14 and across a guiding vane front surface 8 to the extent that the second article portion 22 may interfere with the processing of articles 20 in an adjacent guiding channel 14.

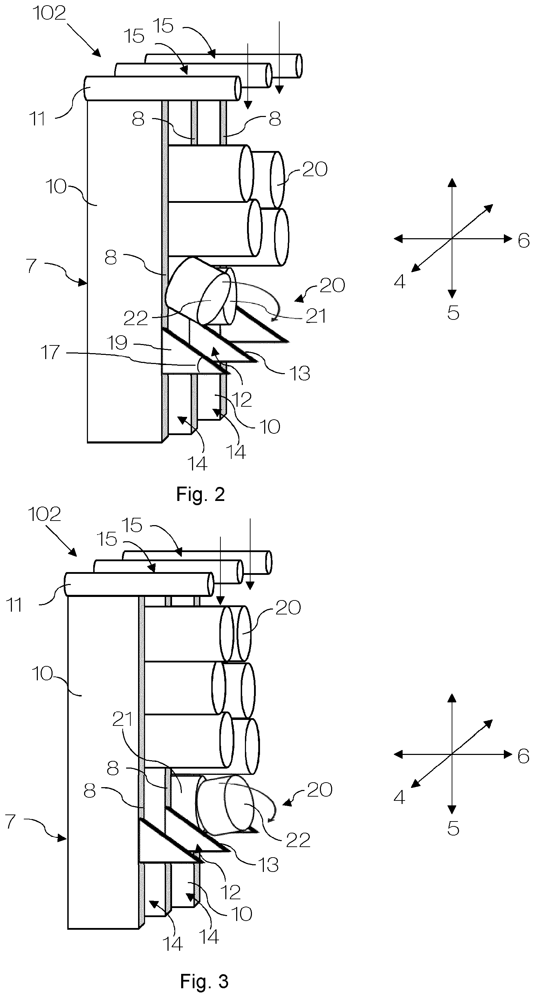

An embodiment of the invention is shown in **Fig. 2** and **Fig. 3****.** In Fig. 2, a series, here three, adjacently arranged guiding vanes 7 are shown, which guiding vanes form two adjacent and parallel guiding channels 14. The guiding channels 14 each have a guiding channel length 5 in the transport direction of the articles 20. A guiding channel depth 6 extends into the direction of the longitudinal axis of the articles 20, when the articles 20 are arranged in the guiding channels 14. A guiding channel width 4 accordingly extends transversely to the length 5 and the depth 6 of the guiding channel 14. The guiding channel width 4 corresponds to the distance of neighbouring guiding vanes 7.

Cylindrically shaped vane heads 11 form guiding channel inlets 15. The vane heads 11 guide the articles 20 into adjacent guiding channels 14. The guiding vanes 7 each comprise a guiding vane front surface 8 extending along the guiding channel length 5 and directing to the front of the hopper 102. The guiding vanes 7 may comprise an opposite guiding vane rear surface 9 extending along the guiding channel length 5. Guiding vane sides 10 of adjacent guiding vanes 7 form at least part of a guiding channel 14. The guiding channels 14 are open along at least a front side of the guiding channel 14.

Fig. 2 shows a situation similar to that of Fig. 1 during processing of articles 20, wherein a second article portion 22 extends out of the front of a guiding channel 14. The second article portion 22 has been displaced and tilted versus a neighbouring guiding channel 14, as indicated by a curved arrow, and extends across a guiding vane front surface 8. The second article portion 22 may thus interfere with the processing of articles 20 in the adjacent neighbouring guiding channel 14.

The guiding vane front surfaces 8 are all provided with a deflector 12 each. The deflectors 12 have a triangular cross-section and protrude from the front surface 8 of the guiding vanes 7. The upper side of the triangularly shaped deflectors 12 form a deflecting surface 13. The deflecting surface 13 is planar and includes a slope angle 17 with respect to the front surface of the guiding vane 7 in transport direction of the articles 20.

The second article portion 22 tilted to the side and versus a neighbouring guiding channel (see curved arrow), meets the deflecting surface 13 while moving downwards. Thus, the second article portion 22 is deflected along the deflecting surface 13 and away from the front side of the guiding channels 14. The deflector 12 as simple mechanical means passively deflects the second article portion 22 extending across the guiding vane front surface 8 away from the hopper 102, while the articles move downwards in the guiding channels 14.

The processing of articles 20 typically includes the articles 20 displacing in the transport direction 6 under the action of forces acting on the article 20, such as gravity and forces resulting from oscillation of the guiding vanes 7, which urge the article 20 to displace in a general vertically downwards direction. The guiding vanes 7 may oscillate during operation of the hopper 102. The oscillation of the guiding vanes 7 may be achieved for example by a vibrating device 24 (not shown) configured to cause the guiding vanes 7 to oscillate during operation of the hopper 2. The deflectors are provided on the guiding vanes. They may be attached to the front surfaces 8 of the guiding vanes 7 or may be integrally formed with the guiding vanes 7. Thus, the deflector 12 oscillates with the guiding vane 7 during operation of the distribution device 2. Accordingly, the oscillating movements of the guiding vanes 7 is transferred to the second portion of the article 22, which may support the deflection of the second portion of the article when moving along the deflector 12.

Should a first article portion 21 and second article portion 22 still partially be engaged, the deflector 12 may cause the first article portion 21 and the second article portion 22 to disengage completely from each other in response to physical contact with the deflector 12. For example, the force acting on an article portion engaged with the deflector, may twist or otherwise displace this article portion to the extent that a wrapping paper tears, causing disengagement of the second article portion 22 from the first article portion.

In Fig. 3 an example is shown, where a tilted second article portion 22 is tilted back versus the first article portion 21 by interaction with the deflector 12. Thus, a deflector 12 may also realize a repositioning of article portions into a guiding channel 14 such that also defective articles and fragments of article may be guiding along a guiding channel without causing blockage of the guiding channel.

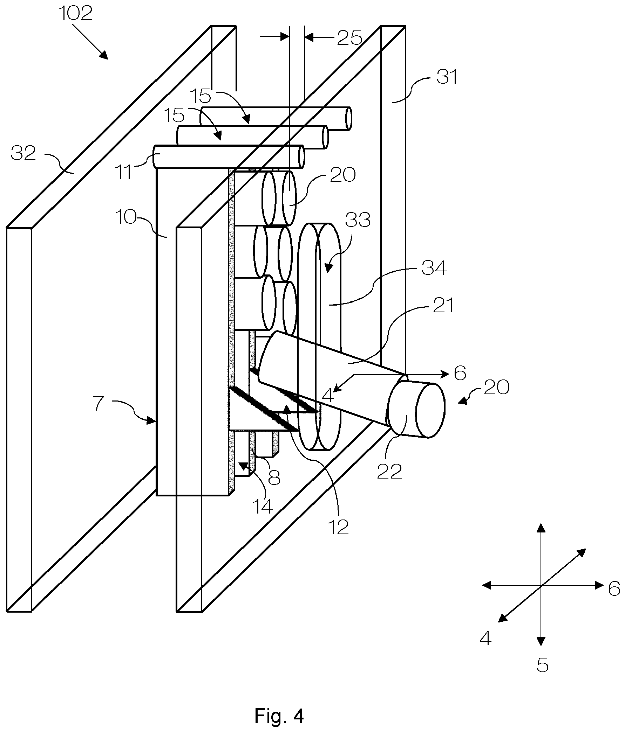

In **Fig. 4****,** a guiding channel frontal boundary in the depth direction of the channel is provided in the form of a front cover 31. The hopper 102 comprises a front cover 31 covering the front side of the hopper 102 and in particular the front side of the guiding channels 14. The front cover 31 restricts article movement in the guiding channels 14 in a direction of the article longitudinal axis. The front cover 31 prevents that the articles 20 may fall out of the guiding channels during their transport along the guiding channels. The front cover 31 is arranged distanced to the front surfaces 8 of the guiding vanes 7 forming the guiding channels 14, and also arranged distanced to the front ends of the articles, such that the articles 20 in the guiding channels 14 may to some extent move along their longitudinal axis in the guiding channels 14. By this, friction between article ends and the front cover 31 are prevented during normal transport of the articles 20 in the guiding channels 14.

The front cover 31 comprises an opening 33. The opening 33 is arranged juxtaposed the guiding vane front surface 8 of the guiding vane 7 provided with a deflector 12. The opening 33 is arranged at the same position than the deflector 12.

Preferably, the front cover 1 comprises at least a same number of openings 33 as there are deflectors 12, wherein an opening 33 is associated with a deflector 12. For simplicity reasons only one opening is shown in Fig. 4.

The deflector 12 projects from the guiding vane front surface 8 of the guiding vane 12 and extends at least partially through the opening 33. By the deflector 12 extending through the opening 33, the deflector 12 is capable of deflecting the article 20 safely to and through the opening 33, though the front cover 31 and away from the hopper 102.

The opening 33 shown in Fig. 4 comprises an elongate, obround shape.

The front cover 31 and, if present also a rear cover 32, has a thickness extending along the depth direction 6. An inner circumference of the opening 33 forms an inner edge 34 extending along the depth direction 6. The inner edge 34 may support a guiding of the article 20 through the opening 33.

The deflector 12 supports the deflected article 20 also after the article has been deflected out from the guiding channel 14 to a position where the article 20 is arranged at least partially in the opening 33. In this position the deflector 12 supports the article 20 from underneath while the inner edge 34 of the opening 33 positions the article 20 laterally along the width of the opening. The article 20 then slides down the sloping deflecting surface 13 of the deflector 12 and out of the distribution device 2.

In Fig. 4, the article 20 is deflected such that it displaces along the width 4 and along the depth 6 of the guiding channel 14, as is derivable from indicators 4, 6. The article 20 contacts the deflecting surface 13 of the deflector 12, which thereby guides the article 20 and facilitates displacement of the article 20 in the predetermined direction of the deflector. Removal of a defective article 20 from the hopper 102 is desirable. Therefore, the deflector 12 is configured to deflect the article 20 out from the guiding channel 14, while the article 20 slides along the deflecting surface 13. Sliding of the article 20 along the deflecting surface 13 is assisted by the deflector 12 oscillating with the guiding vane 7. Due to the deflecting surface slope angle 17, displacement of the article 20 is assisted by gravity.

Fig. 4 also shows an exemplary article 20 wherein a first article portion 21 and a second article portion 22 is coaxially misaligned. In this example, the article 20 is broken and the second article portion 22 is still at least partially attached to the first article portion 21. The second article portion 22 may thereby reach across a guiding vane front surface 8.

The front cover 31 may be transparent for the purpose of visual inspection of the guiding channels 14 and the processing of the articles 20 in the hopper 102. For example, the front cover may be made of a transparent plastics material, such as for example Plexiglas.

The guiding channels 14 may be closed at their lowermost ends by a bottom wall (not shown). The articles 20 thus displace in the guiding channels 14 in the transport direction towards the bottom wall.

A shown in Fig. 4, the guiding channel depth 5 is smaller than the longitudinal length of an article 20. A front gap 25 is provided between the guiding vane front surface 8 and the inner side of the front cover 31 facing the guiding vane front surface 8. Likewise, a rear gap may be provided between a guiding vane rear surface 9 and a rear cover 32. An article diameter 23 may be less than the front gap 25.

The guiding channel depth may preferably be adapted to be in a range of 5 to 10 percent smaller than the length of the article 20. Thereby, interaction between the articles 20 and the front or rear boundaries 32, 32 is minimized. The guiding channel depth 5 is defined by the extension of the guiding vanes in a depth direction.

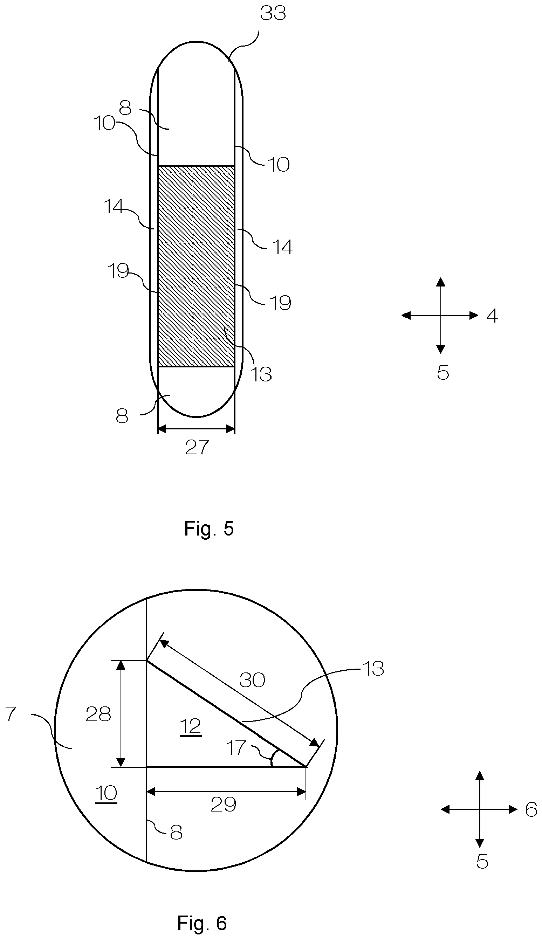

In **Fig. 5** and **Fig. 6** the deflector is shown in more detail. Fig. 5 shows a front-view of the deflector 12 through the opening 33 in the front cover 31 according to the embodiment of Fig. 4. Fig. 6 is a side view of a deflector 12.

As shown in Fig. 5, the deflector 12 is provided at the guiding vane front surface 8. The deflector 12 may be attached to the guiding vane front surface 8 or be integrally formed with the guiding vane 7. The guiding vane front surface 8 extends between the opposite arranged guiding vane sides 10 of the guiding vane 7. The deflector 12 comprises a planar deflecting surface 13. The deflecting surface 13 extends between opposing deflector sides 19. The deflector 12 projects in a direction normal to the guiding vane front surface 8. The deflector sides 19 are arranged flush with the guiding vane sides 10.

The extensions of the opening 33 are larger than the extensions of the deflector 12. In particular, the opening length is greater than the deflector height 28 (along the length direction 5). Likewise, the opening width is greater than the deflector width 27. Preferably, the opening width is marginally greater than the article diameter 23, such as for example 20 to 50 percent greater. As an example, the article diameter 23 may be 7 millimeters and the opening width may be 9 millimeters to 12 millimeters.

In Fig. 6, the deflector 12 projects in a direction normal to the guiding vane front surface 8. The deflector height 28 extends along the longitudinal direction 5 and is in the range of 10 millimeters to 25 millimeters, preferably 12 millimeters to 20 millimeters, for example of about 15 millimeters.

The deflector depth 29 extends along the depth extension 4 and is in the range of 5 millimeters to 40 millimeters, preferably 10 millimeters to 30 millimeters, more preferably in a range of 15 millimeters to 25 millimeters, for example of about 21 millimeters.

The length of the deflecting surface 13 may be in the range of 5 millimeters to 50 millimeters, preferably 10 millimeters to 40 millimeters, more preferably 20 millimeters to 30 millimeters, for example about 26 millimeters.

The deflector 12 has a body comprising a right-triangular shaped cross-section as shown in Fig. 6. This simple shape enables easy attachment of the deflector 12 to the guiding vane front surface 8, while providing a deflecting surface 13 with a slope angle 17. In Fig. 6, the deflecting surface 13 constitutes the hypotenuse of the triangle.

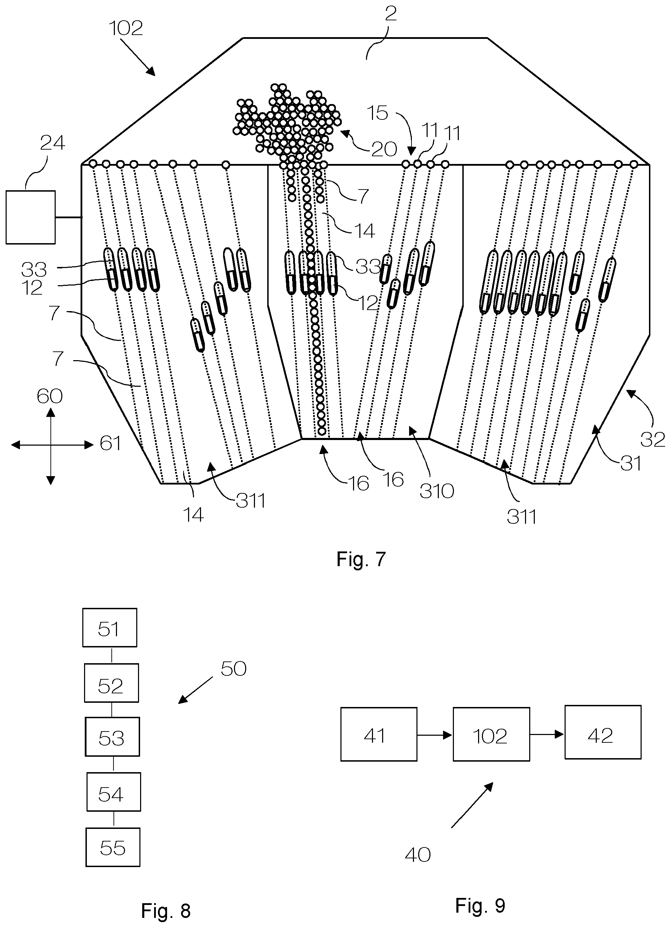

**Fig. 7** schematically shows a hopper 102 comprising a reservoir 2 comprising a plurality of rod-shaped articles 20. A vibrating device 24 is connected to the hopper 102 and is configured to cause the guiding vanes 7 to oscillate. In between the guiding vanes 7, guiding channels 14 are formed. The guiding channels 14 extend in a substantially vertical direction 60 but not exactly vertically. The guiding channels 14 include an angle of about 15 degrees with respect to an exact vertical line.

A vertical direction 60 and a horizontal direction 61 respectively is indicated for reference. The guiding channels 14 extend between respective guiding channel inlets 15 and guiding channel outlets 16. A front cover 31 and a rear cover 32 (not shown) delimits movement of articles 20 along the guiding channel depth 6.

The guiding channels length 5 comprises a substantial vertical component. The guiding vane width tapers along the guiding channel length 5 such that the guiding channels 14 converge in the transport direction as is shown in Fig.7. Thereby, the articles 20 being processed in the hopper 102 are brought into closer proximity of each other while being displaced in the transport direction towards the guiding channel outlets 16.

The front cover 31 is provided with several openings, arranged at the position of the deflectors 12. The positions of the openings 33 along the height of the hopper 102, as well as the sizes of the openings 33 vary.

The opening length is optimized to remove defective articles out of the hopper 102. Several openings 33 have a same size and position. Some openings 33 are positioned in a more downstream position than other openings 33.

The position of the deflectors 12 along the guiding channel length 5 varies accordingly. Some deflectors 12 are arranged on a guiding vane front surface 8 in a more upstream position of a guiding channel 14, while some deflectors are arranged on a guiding vane front surface in a more downstream position of a guiding channel. In Fig. 7 one deflector 12 and one opening 33 is provided per guiding vane. However, according to other embodiments, more than one deflector may be arranged at a same guiding vane, preferably at different vertical positions.

In the example of Fig. 7, the front cover 31 comprises three separate sections; a center section 310 and two adjacent side sections 311. The separate sections 310,311 each cover the front of some of the guiding channels 14. The separate sections 310,311 allow access to some of the guiding channels 14. Thus, if blockage in a guiding channel 14 in one section of the hopper 1 occurs, the front cover of this section only may be removed. Article processing may continue undisturbedly in the other hopper sections.

The separate sections 310, 311 of the front cover 31 may be removably or hingedly connected to a hopper housing such as to be individually removable or openable.

**Fig. 8** shows a diagrammatic illustration of a method 50 for removing articles 20 from a hopper 102 as described herein. The method 50 comprises a step 51 of receiving articles 20 in adjacent guiding channels 14 formed by a plurality of guiding vanes 7; a step 52 of oscillating the guiding vanes 7, thereby oscillating the articles 20 downwards through the guiding channels 14; and a step 53 of removing articles 20 that extend over a guiding vane front surface 8 by deflecting the articles 20 in a direction radially away from the guiding vane front surface 8 by means of a deflector 12 arranged at the guiding vane front surface 8.

The method 50 may further comprise sub-step 54 of covering a front side of the hopper 102 with a front cover 31 and providing at least one opening 33 in the front cover 31; and sub-step 55 of removing articles 20 from the hopper 102 by deflecting the article 20 through the at least one opening 33 by the deflector 12.

**Fig. 9** shows a schematic exemplary manufacturing line 40 for processing rod-shaped articles 20 comprising a hopper 102 according to the present invention. The manufacture line 40 comprises an assembly unit 41 for assembling rod-shaped articles 20, a conveying unit 42 and the hopper 102 arranged in between the assembly unit 41 and the conveying unit 42. The manufacturing line 40 may further comprise, for example, one or more of a sorting unit for article sorting and a packaging unit for packing of rod-shaped articles 20.

For the purpose of the present description and of the appended claims, except where otherwise indicated, all numbers expressing amounts, quantities, percentages, and so forth, are to be understood as being modified in all instances by the term "about". Also, all ranges include the maximum and minimum points disclosed and include any intermediate ranges therein, which may or may not be specifically enumerated herein. In this context, therefore, a number A is understood as A ± 5 % of A. Within this context, a number A may be considered to include numerical values that are within general standard error for the measurement of the property that the number A modifies. The number A, in some instances as used in the appended claims, may deviate by the percentages enumerated above provided that the amount by which A deviates does not materially affect the basic and novel characteristic(s) of the claimed invention. Also, all ranges include the maximum and minimum points disclosed and include any intermediate ranges therein, which may or may not be specifically enumerated herein.

## Claims

1. A hopper (102) for rod-shaped articles (20) having a longitudinal axis, the hopper (102) comprising a plurality of guiding vanes (7) defining adjacent guiding channels (14) in between the guiding vanes (7), the guiding channels (14) provided for guiding rod-shaped articles (20) through the hopper (102) in a transport direction transverse to the longitudinal axis of the articles (20), wherein the guiding channels (14) comprise substantially vertical inner walls (10) formed by the guiding vanes (7) and are open along at least a front side such that articles (20) may extend out of the guiding channels (14) and beyond guiding vane front surfaces (8); a deflector (12) arranged at a front surface (8) of at least one guiding vane (7), the deflector (12) for removing a rod-shaped article (20) from the hopper (102), which article (20) extends across the front surface (8) of the at least one guiding vane (7).

2. Hopper (102) according to claim 1, wherein the deflector (12) projects from the guiding vane front surface (8) of the at least one guiding vane (7).

3. Hopper (102) according to any of the preceding claims, wherein the deflector (12) comprises a deflecting surface (13).

4. Hopper (102) according to claim 3, wherein the deflecting surface (13) comprises a slope (17) into the transport direction of the rod-shaped articles (20).

5. Hopper (102) according to any one of the preceding claims, wherein the deflector (12) comprises a triangular cross-section or comprises a body having a triangular cross-section, for example in the form of a right-triangle or equilateral triangle.

6. Hopper (102) according to any one of the preceding claims, wherein the deflector (12) is arranged at the at least one guiding vane front surface (8) at a position between a guiding channel inlet (15) and a guiding channel outlet (16) of the guiding channel (14) partially formed by the at least one guiding vane (7).

7. Hopper (102) according to any one of the preceding claims, wherein a deflector (12) is arranged at the guiding vane front surface (8) of several or of all guiding vanes (7).

8. Hopper (102) according to claim 7, wherein a position of the deflector (12) at the guiding vane front surface (8) is different to a position of the deflector (12) at the guiding vane front surface (8) of a neighbouring guiding vane (7).

9. Hopper (102) according to any one of the preceding claims, further comprising a front cover (31) covering the front side of the guiding channels (14).

10. Hopper (102) according to claim 9, wherein the front cover (31) comprises at least one opening (33), and wherein the opening (33) is arranged juxtaposed the guiding vane front surface (8) of the at least one guiding vane (7) provided with the deflector (12) and is arranged at the position of the deflector (12).

11. Hopper (102) according to any one of claims 9 to 10, wherein the front cover (31) comprises the deflector (12).

12. Hopper (102) according to any one of claims 9 to 11, wherein a front gap (25) is arranged between the front surface (8) of the at least one guiding vane (7) and an inner side of the front cover (31).

13. A manufacturing line of rod-shaped articles (20) comprising a hopper (102) according to any one of the preceding claims.

14. A method for removing a rod-shaped article (20) from a hopper (102) according to any one of claims 1 to 12, the method comprising:
Receiving rod-shaped articles (20) in adjacent guiding channels (14) formed by a plurality of substantially vertically arranged guiding vanes (7);
oscillating the guiding vanes (7), thereby oscillating the rod-shaped articles (20) downwards through the guiding channels (14);
removing a rod-shaped article (20) that extends over a guiding vane front surface (8), by deflecting the rod-shaped article (20) in a direction radially away from the guiding vane front surface (8) by means of a deflector (12) arranged at the guiding vane front surface (8).

15. The method according to claim 14, therein covering a front side of the hopper (102) with a front cover (31);
providing at least one opening (33) in the front cover (31); and
removing the rod-shaped article (20) from the hopper (102) by deflecting the rod-shaped article (20) through the at least one opening (33) by the deflector (12).

## Patentansprüche

1. Trichter (102) für stabförmige Artikel (20) mit einer Längsachse, der Trichter (102) umfassend eine Vielzahl von Führungsschaufeln (7), die angrenzende Führungskanäle (14) zwischen den Führungsschaufeln (7) definieren, die Führungskanäle (14) für ein Führen von stabförmigen Artikeln (20) durch den Trichter (102) in einer Transportrichtung quer zu der Längsachse der Artikel (20) vorgesehen sind, die Führungskanäle (14) im Wesentlichen vertikale Innenwände (10) umfassen, die von den Führungsschaufeln (7) gebildet werden, und entlang wenigstens einer Vorderseite offen sind, sodass sich Artikel (20) aus den Führungskanälen (14) heraus und über die Führungsschaufel-Vorderflächen (8) hinaus erstrecken können; einen Deflektor (12), der an einer Vorderfläche (8) von wenigstens einer Führungsschaufel (7) angeordnet ist, wobei der Deflektor (12) für ein Entfernen eines stabförmigen Artikels (20) aus dem Trichter (102) vorgesehen ist, sich der Artikel (20) über die Vorderfläche (8) der wenigstens einen Führungsschaufel (7) erstreckt.

2. Trichter (102) nach Anspruch 1, wobei der Deflektor (12) von der Führungsschaufel-Vorderfläche (8) der wenigstens einen Führungsschaufel (7) vorsteht.

3. Trichter (102) nach einem beliebigen der vorhergehenden Ansprüche, wobei der Deflektor (12) eine deflektierende Fläche (13) umfasst.

4. Trichter (102) nach Anspruch 3, wobei die deflektierende Fläche (13) eine Schräge (17) in Transportrichtung der stabförmigen Artikel (20) umfasst.

5. Trichter (102) nach einem beliebigen der vorhergehenden Ansprüche, wobei der Deflektor (12) einen dreieckigen Querschnitt aufweist oder einen Körper mit einem dreieckigen Querschnitt, beispielsweise in Form eines rechtwinkligen Dreiecks oder eines gleichseitigen Dreiecks, aufweist.

6. Trichter (102) nach einem beliebigen der vorhergehenden Ansprüche, wobei der Deflektor (12) an der wenigstens einen Führungsschaufel-Vorderfläche (8) an einer Position zwischen einem Führungskanaleinlass (15) und einem Führungskanalauslass (16) des Führungskanals (14) angeordnet ist, der teilweise durch die wenigstens eine Führungsschaufel (7) gebildet wird.

7. Trichter (102) nach einem beliebigen der vorhergehenden Ansprüche, wobei ein Deflektor (12) an der Führungsschaufel-Vorderfläche (8) von mehreren oder allen Führungsschaufeln (7) angeordnet ist.

8. Trichter (102) nach Anspruch 7, wobei eine Position des Deflektors (12) an der Führungsschaufel-Vorderfläche (8) von einer Position des Deflektors (12) an der Führungsschaufel-Vorderfläche (8) einer angrenzenden Führungsschaufel (7) verschieden ist.

9. Trichter (102) nach einem beliebigen der vorhergehenden Ansprüche, ferner umfassend eine Frontabdeckung (31), die die Vorderseite der Führungskanäle (14) abdeckt.

10. Trichter (102) nach Anspruch 9, wobei die Frontabdeckung (31) wenigstens eine Öffnung (33) umfasst, und wobei die Öffnung (33) der Führungsschaufel-Vorderfläche (8) der wenigstens einen mit dem Deflektor (12) bereitgestellten Führungsschaufel (7) gegenübergestellt angeordnet ist und an der Position des Deflektors (12) angeordnet ist.

11. Trichter (102) nach einem der Ansprüche 9 bis 10, wobei die Frontabdeckung (31) den Deflektor (12) umfasst.

12. Trichter (102) nach einem der Ansprüche 9 bis 11, wobei zwischen der Vorderfläche (8) der wenigstens einen Führungsschaufel (7) und einer Innenseite der Frontabdeckung (31) ein vorderer Spalt (25) angeordnet ist.

13. Fertigungsstraße für stabförmige Artikel (20), umfassend einen Trichter (102) nach einem beliebigen der vorhergehenden Ansprüche.

14. Verfahren für ein Entfernen eines stabförmigen Artikels (20) aus einem Trichter (102) nach einem der Ansprüche 1 bis 12, das Verfahren umfassend:
Aufnehmen von stabförmigen Artikeln (20) in angrenzenden Führungskanälen (14), die durch eine Vielzahl von im Wesentlichen vertikal angeordneten Führungsschaufeln (7) gebildet werden;
Oszillieren der Führungsschaufeln (7), wodurch die stabförmigen Artikel (20) durch die Führungskanäle (14) nach unten oszilliert werden;
Entfernen eines stabförmigen Artikels (20), der sich über eine Führungsschaufel-Vorderfläche (8) erstreckt, durch Deflektieren des stabförmigen Artikels (20) in einer Richtung radial weg von der Führungsschaufel-Vorderfläche (8) mittels eines Deflektors (12), der an der Führungsschaufel-Vorderfläche (8) angeordnet ist.

15. Verfahren nach Anspruch 14, wobei eine Vorderseite des Trichters (102) mit einer Frontabdeckung (31) abgedeckt wird;
Vorsehen von wenigstens einer Öffnung (33) in der Frontabdeckung (31); und
Entfernen des stabförmigen Artikels (20) aus dem Trichter (102) durch Deflektieren des stabförmigen Artikels (20) durch die wenigstens eine Öffnung (33) durch den Deflektor (12).

## Revendications

1. Trémie (102) pour articles en forme de tige (20) ayant un axe longitudinal, la trémie (102) comprenant une pluralité d'ailettes de guidage (7) définissant des canaux de guidage (14) adjacents entre les ailettes de guidage (7), les canaux de guidage (14) étant prévus pour guider des articles en forme de tige (20) à travers la trémie (102) dans une direction de transport transversale à l'axe longitudinal des articles (20), dans laquelle les canaux de guidage (14) comprennent des parois intérieures sensiblement verticales (10) formées par les ailettes de guidage (7) et sont ouverts le long d'au moins un côté avant de sorte que des articles (20) peuvent s'étendre hors des canaux de guidage (14) et au-delà des surfaces avant d'ailettes de guidage (8) ; un déflecteur (12) agencé au niveau d'une surface avant (8) d'au moins une ailette de guidage (7), le déflecteur (12) étant destiné à retirer un article en forme de tige (20) de la trémie (102), lequel article (20) s'étend en travers de la surface avant (8) de l'au moins une ailette de guidage (7).

2. Trémie (102) selon la revendication 1, dans laquelle le déflecteur (12) fait saillie à partir de la surface avant d'ailette de guidage (8) de l'au moins une ailette de guidage (7).

3. Trémie (102) selon l'une quelconque des revendications précédentes, dans laquelle le déflecteur (12) comprend une surface déflectrice (13).

4. Trémie (102) selon la revendication 3, dans laquelle la surface déflectrice (13) comprend une pente (17) dans la direction de transport des articles en forme de tige (20).

5. Trémie (102) selon l'une quelconque des revendications précédentes, dans laquelle le déflecteur (12) comprend une coupe transversale triangulaire ou comprend un corps ayant une coupe transversale triangulaire, par exemple en forme de triangle rectangle ou de triangle équilatéral.

6. Trémie (102) selon l'une quelconque des revendications précédentes, dans laquelle le déflecteur (12) est agencé sur l'au moins une surface avant d'ailette de guidage (8) au niveau d'une position entre une entrée de canal de guidage (15) et une sortie de canal de guidage (16) du canal de guidage (14) formé partiellement par l'au moins une ailette de guidage (7).

7. Trémie (102) selon l'une quelconque des revendications précédentes, dans laquelle un déflecteur (12) est agencé sur la surface avant d'ailette de guidage (8) de plusieurs ou de toutes les ailettes de guidage (7).

8. Trémie (102) selon la revendication 7, dans laquelle une position du déflecteur (12) au niveau de la surface avant d'ailette de guidage (8) est différente d'une position du déflecteur (12) au niveau de la surface avant d'ailette de guidage (8) d'une ailette de guidage (7) voisine.

9. Trémie (102) selon l'une quelconque des revendications précédentes, comprenant en outre un capot avant (31) recouvrant le côté avant des canaux de guidage (14).

10. Trémie (102) selon la revendication 9, dans laquelle le capot avant (31) comprend au moins une ouverture (33), et dans laquelle l'ouverture (33) est agencée de manière juxtaposée à la surface avant d'ailette de guidage (8) de l'au moins une ailette de guidage (7) munie du déflecteur (12) et est agencée au niveau de la position du déflecteur (12).

11. Trémie (102) selon l'une quelconque des revendications 9 à 10, dans laquelle le capot avant (31) comprend le déflecteur (12).

12. Trémie (102) selon l'une quelconque des revendications 9 à 11, dans laquelle un espace avant (25) est agencé entre la surface avant (8) de l'au moins une ailette de guidage (7) et un côté intérieur du capot avant (31).

13. Ligne de fabrication d'articles en forme de tige (20) comprenant une trémie (102) selon l'une quelconque des revendications précédentes.

14. Procédé de retrait d'un article en forme de tige (20) d'une trémie (102) selon l'une quelconque des revendications 1 à 12, le procédé comprenant :
la réception d'articles en forme de tige (20) dans des canaux de guidage (14) adjacents formés par une pluralité d'ailettes de guidage (7) agencées sensiblement verticalement ;
l'oscillation des ailettes de guidage (7), faisant ainsi osciller les articles en forme de tige (20) vers le bas à travers les canaux de guidage (14) ;
le retrait d'un article en forme de tige (20) qui s'étend sur une surface avant d'ailette de guidage (8), en déviant l'article en forme de tige (20) dans une direction radialement en éloignement de la surface avant d'ailette de guidage (8) au moyen d'un déflecteur (12) agencé au niveau de la surface avant d'ailette de guidage (8).

15. Procédé selon la revendication 14, comprenant le recouvrement d'un côté avant de la trémie (102) avec un capot avant (31) ;
la fourniture d'au moins une ouverture (33) dans le capot avant (31) ; et
le retrait de l'article en forme de tige (20) de la trémie (102) en déviant l'article en forme de tige (20) à travers l'au moins une ouverture (33) par le déflecteur (12).
